# EUROPEAN PATENT SPECIFICATION

(11) **EP 2 042 848 B1**
(45) Date of publication and mention of the grant of the patent: **23.03.2016**
(21) Application number: 08011407.7
(22) Date of filing: 24.06.2008
(51) Int. Cl.: G01M 3/00

(54) **A method of determining the pressure in a container, as well as an apparatus therefor**
Verfahren zum Bestimmen des Drucks in einem Behälter, sowie Vorrichtung dafür
Procédé pour déterminer la pression dans un conteneur, et appareil associé

(30) Priority: 25.06.2007 NL 1034030
(43) Date of publication of application: 01.04.2009
(73) Proprietor: Hermans, Theodoor Hubert Maria, 7491 DS Delden (NL)
(72) Inventor: Hermans, Theodoor Hubert Maria, 7491 DS Delden (NL)
(74) Representative: Altenburg, Bernardus Stephanus Franciscus

(56) References cited:
- US-A- 4 747 298
- US-A- 4 862 732
- US-A- 5 767 392

## Description

The present invention relates to a method for determining the pressure inside a cylinder-shaped container having a bottom end and a top end, wherein the container is pressed against a probe and the wall of the container touching the probe is pushed inwards over a predetermined distance, and the force needed for pushing up to the predetermined distance is determined by a sensor operating with and connected to the probe.

It is generally known in the industry to determine the pressure in a container. Purchasers of aerosol containers, such as those used for whipped cream, may demand that no more than a certain percentage of aerosol containers will have a pressure below the desired minimum pressure. It may entail a large financial loss for a manufacturer of aerosol containers if a batch is refused. Determining the pressure in an aerosol container is not a simple matter. After inserting gas or propellant into the aerosol container, it will dissolve into the contents of the aerosol container, e.g. into the whipped cream. This means that the pressure varies over time, often non-linear. Being able to measure quickly will then be important in order that each aerosol container can be gauged during the production process and, if so desired, at a fixed moment in time after filling the container.

It is known to test the pressure of an aerosol container by pressing a probe against the aerosol container and measuring the distance by which the wall of the aerosol container is pushed inwards by a certain force. In practice, this method appears to be insufficiently quick enough and/or not reliable enough.

The method as mentioned in the preamble is known from US 4862732A. The method entails the step of increasing the pressure inside the container by compressing the container simultaneously from two opposite sides and monitoring the wall position or the force exerted on the wall. It has shown that this method can be altered so as to provide an alternative.

The purpose of the present invention is to provide a method for determining the presence of a minimum pressure in a container reliably and, if so desired, quickly.

To this end, the present invention provides a method as mentioned in the preamble, which is characterized in that the side wall of the container near its bottom end is pressed against a bottom stop and near its top end against a top stop, the container is pressed against a probe positioned between the bottom and top stops and the wall of the container touching the probe is pushed inwards over a predetermined distance at a pressure inside the container between atmospheric pressure and a desired pressure, with the proviso that the predetermined distance at the desired pressure inside the container, differs by a maximum of 15% from that when there is an atmospheric pressure inside the container.

Using this method, a very reliable assessment can be made as to whether the container has the desired pressure. According to the invention, the wall of the container will be pushed inwards within strictly defined margins over a mainly fixed distance. However, in principle, the said fixed distance will depend on the pressure inside the container. According to the invention, however, no effort is made to measure the said distance and to check whether the wall of the container has actually been pushed inwards over the said distance. Instead, according to the invention, it is ensured that the wall is pushed inwards at least over a defined distance up to the desired pressure inside the container. This will reduce the determination of the pressure inside the container to measuring a force and when this force exceeds a certain threshold value, the desired pressure is present inside the container. According to an important application, the desired pressure is a minimum pressure. In that case, the distance over which the wall is pushed inwards will be a maximum of 15% less than the distance over which the wall of the container is pushed inwards when an atmospheric pressure is present inside the container. In view of the importance of this embodiment, the remaining part of this application will refer to the desired minimum pressure without the invention being limited therein. When the method is not intended for testing a certain minimum or maximum pressure, but merely to measure the pressure inside containers, the maximum pressure present inside the container should be taken as the desired pressure. In the present application, the term "determining" includes both testing (i.e. determining whether or not a certain minimum or maximum pressure is present) and measuring (i.e. determining a value for that pressure. There is no need also to express the outcome as a pressure unit, such as bar. The threshold value for a desired minimum pressure could, for example, also be in the form of a number of millivolts, as recorded by a measuring instrument. Preferably, instead of 15%, the difference in distance is less than 10%, more preferably less than 5%. This can be achieved easily using sensors that only need to be slightly compressed or with which, for example, a leverage or gear wheel construction is applied by which the distance covered, as measured by the sensor, is increased. The stops provide a frame of reference, causing often inevitable differences in diameter between (aerosol) containers to no longer play an essential role. Within the framework of the invention, a container is a unit packaging such as an aerosol container or bottle for whipped cream or soft drinks or mineral water respectively, for example. Within the framework of the invention, the said unit packaging therefore is a unit packaging of which its content is under pressure. In the present application, a cylinder-shaped container means such a container that has a circular cross-section between the top and bottom sides, which has a wall running diagonally to the circular cross-section, whereby content, such as a fluid, is present at the said circular cross-section when the container is in a filled condition. It is not necessary, therefore, for the cylindrical nature to extend across the entire height of the container, which in practice will rarely be the case with bottles and spray cans. In general, the probe will be aimed at the centre line across the container, but some deviation thereof is permissible. The probe is positioned at the side of the top and bottom stops, which means that a force exerted on a container, pressing the said container against the stops is also a force that pushes the container against the probe. Within the framework of the present invention, the expression "a sensor actively connected to the probe" also includes the probe being an integrated component of a (force) sensor, such as one of its ends.

According to an important embodiment, the bottom and top stops act as guides for carrying the container over the probe.

Quick (continuous) measuring is thus possible. It will be clear that, using the method according to the invention, the container does not need to be stopped at the probe in order to perform the measuring.

A favourable embodiment is characterised by the bottom and top stops acting as a guide for carrying the container rotating around its longitudinal axis past the stops and over the probe without skidding.

This will help prevent damage to the wall and also provides, not unimportantly, a significant reduction in the noise level.

This can be achieved easily when the container is pressed against the stops using at least 1 pressure wheel.

Preferably, the probe will then point towards the rotation axis of the pressure wheel. This will cause the pressure wheel to exert maximum force onto the probe when the container passes the probe.

Preferably, at least 1 pressure wheel will be a driven pressure wheel. Using a simple construction, both transporting the container past the probe and pressing is thus realised simultaneously.

In order to avoid damage to the wall of the container, it is preferred that the probe and the container have a contact surface of at least 0.5 cm² when the desired minimum pressure is present inside the container and the probe pushes the wall of the container inwards up to a predetermined distance.

The said surface can be measured by moistening either the probe or the wall of the container very thinly using a colouring agent.

In general, the wall of a container will not be pushed inwards by elastic deformation to such an extent that it will not regain its original shape (before measurement). The following embodiments are preferred for reliable measuring without damage:
- the container is one having a metal wall and the predetermined distance is 0.1 mm minimally and preferably 0.25 mm minimally; and more preferably, the predetermined distance is 2 mm maximally, preferably 1.5 mm maximally and most preferably 1 mm maximally;
- the container is one having a synthetic wall and the predetermined distance is 1 mm minimally and preferably 1.5 mm minimally; and more preferably, the predetermined distance is 8 mm maximally, preferably 6 mm maximally and most preferably 4 mm maximally.

According to a favourable embodiment, the container is an aerosol container and with at least 1 of the bottom and top stops touching a contact area selected from a flange and a beaded edge of the aerosol container.

Forces onto the said contact areas will have no or hardly any effect on the pressure inside the aerosol container, thus enabling very accurate measurements.

The invention also relates to a device for determining the pressure inside a container in accordance with the method as mentioned hereinbefore, wherein the device has a bottom stop and a top stop and a probe is present between the bottom and top stops, which is connected to a force sensor.

Even though the probe is positioned (physically), at least partly, between the bottom and top stops, the contact surface of the probe may here protrude outside a plane defined by the stops. In practice, this will indeed mostly be the case.

According to a favourable embodiment, the entirety of the bottom and top stops, the probe and the force sensor forms part of a unit which can be moved within a frame of the device in a direction diagonal to the stops.

Such a device is extremely insensitive to accidents during usage which could damage the measuring installation, particularly the sensor.

The present invention will now be further explained with reference to the accompanying drawings, wherein:
fig. 1 shows a schematic cross-section of a device according to the invention;
fig. 2 displays a top view of the device showed in fig. 1; and
fig. 3 shows a cross-section along line III-III of fig. 1.

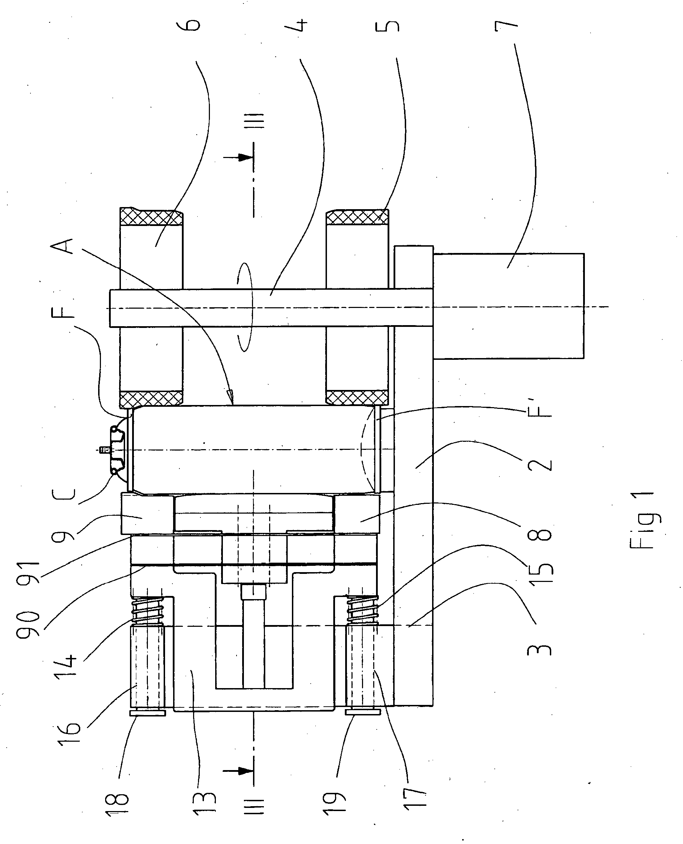

Fig. 1 shows a preferred embodiment of a device 1 according to the invention, in which an aerosol container A is also displayed, which is being tested on the pressure therein.

The device includes a basic frame having a base plane 2 and an erect frame component 3. The base frame is further fitted with an axle 4, a bottom pressure roll 5, and a top pressure roll 6. Across their girth, these are fitted with rubber (indicated by cross markings) to enable a secure grip on the aerosol container A. The pressure rolls 5, 6 are driven by a motor 7.

The pressure rolls 5, 6 press the aerosol container A against a bottom stop 8 and a top stop 9. In the embodiment shown, those stops 8, 9 grip flanges F, F', but the stops 8, 9 could just as well seize aerosol container wall W near flanges F, F', at a distance of 1 cm from them, for example, since it will only cause limited measuring errors, for which correction is possible, if so desired. The top stop 9 could just as well grip beaded edge C.

The stops 8, 9 define the position of the aerosol container A and thus directly (when stops 8, 9 grip the cylinder-shaped wall) or - as in this case - indirectly (when the stops grip a part of the aerosol container outside the cylinder-shaped wall) the position of aerosol container wall W at the location of a probe 10 if the latter were not present. However, probe 10 extends beyond that reference position (i.e. in the direction of pressure rolls 5, 6), causing the aerosol container wall W to be pressed inwards across a predetermined distance. The said predetermined distance is only dependent to a very limited extent on the pressure inside the aerosol container A, at least within the range between atmospheric pressure and the desired minimum pressure. Within the framework of the invention, the term "hardly" means that when there is atmospheric pressure inside aerosol container A and aerosol container A will be pressed inwards across a distance S, the aerosol container A will be pressed inwards across a distance of at least 0.85 x S when the desired minimum pressure is present therein. Probe 10, here in the form of a metal T-shaped component, transfers the force to a sensor 11, which issues a signal depending on that force. Based upon such, data processing equipment (not displayed) will be able to decide whether aerosol container A should be rejected or declared OK. A suitable sensor 11 is KAP-S, available at Bienfait bv, Haarlem, Netherlands.

According to an important embodiment, the method according to the invention enables very accurate and, if so desired, yet quick measuring because the predetermined distance across which the container A is pressed inwards is mainly constant. That is, with a desired minimum pressure inside the container, the said predetermined distance is a maximum of 15% less than when atmospheric pressure is present inside the container. The advantage is that the relation between the signal issued by the force sensor and the pressure inside the container becomes virtually linear, thus causing data processing for performing measurements to be simplified as well.

In general, for the application of the method according to the invention, the device used will be calibrated using a container having a known pressure or a pressure that can be determined after performing the measurement. This enables a container to be filled with propellant only, for example. Additionally, the pressure inside the container can be determined through the exit opening, for example. If so desired, a measured pressure will indeed be expressed as a pressure, but that is not necessary.

For a more reliable measurement of the force, and to avoid malfunctions in the case of continuously performed measurements as in a production line, it is preferred that probe 10 and sensor 11 are not interconnected (probe 10 can move slightly, as will be explained later) and the force is transferred via a contact surface 12 instead. In the embodiment shown herein, probe 10 is suspended in leaf springs 90, 91.

Since there is no need to stop the container to be tested or gauged during measurement in the measuring method according to the invention described herein, it is possible to apply the said methods on production lines on which containers such as bottles or aerosol containers are filled with gas and/or propellant at high speed.

In the event that the measurement indicates that the required minimum pressure is not present, aerosol container A will be removed from the production line in a way currently known.

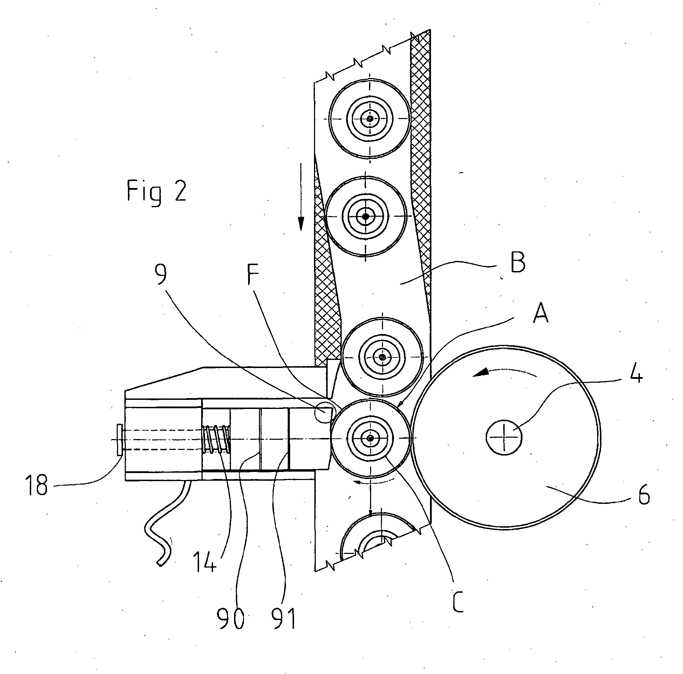

Fig. 2 shows a top view of the device integrated into a production line for aerosol containers. Aerosol containers are carried to installation 1 via a transport belt B. Pressure rolls 5, 6 (only the top one is visible in fig. 2) grip a fed aerosol container A and carry it smoothly past probe 10, causing aerosol container wall W of aerosol container A to be pressed inwards. With this, pressure rolls 5, 6 press aerosol container A against stops 8, 9 (only top stop 9 is visible in fig. 2), which act as guides for aerosol container A to pass probe 10.

In practice, pressure rolls 5, 6 will rotate at such a speed that the supply speed of the aerosol containers is lower than the speed at which an aerosol container is carried past probe 10. This causes the aerosol container to be pulled away from other aerosol containers and is no longer in contact with them, by which damage to the print on the aerosol container as a result of the measurement process is avoided.

In practice, probe 10 will point towards axles 4 of pressure rolls 5, 6, albeit that some deviation thereof is permissible. A pressure belt may, for example, be used instead of pressure rolls 5, 6. In such case, the direction of movement of the probe will be perpendicular to the pressure belt, albeit that some deviation is permissible.

At the preferred embodiment according to the device of the invention, displayed in fig. 1, a sub-frame 13 is present, in which sensor 11 and probe 10 are included. Sub-frame 13, sensor 11 and probe 10 are part of a unit as mentioned in one of the conclusions. Sub-frame 13 has been included as movable in the basic frame of device 1. The reason for this is to prevent damage to device 1 and particularly sensor 11, in case something goes wrong during the measurement process. If a force is exerted onto sub-frame 13, which is greater than a predetermined value, then springs 14, 15 are compressed and sub-frame 13 will move to the erect frame component 3 of device 1. However, as long as the said predetermined value for the force on sub-frame 13 is not exerted, sub-frame 13 will remain in a position at a maximum distance from the erect frame component 3 through springs 14, 15. A choice may also be made to have springs 14, 15 always compressed for a small distance during a measurement, e.g. 1 mm. In the displayed embodiment, there are two continuing openings in the erect frame component 13, which act as guides for axles 16, 17 that are fitted with locks 18, 19 at their distal ends, which may be nuts, for example.

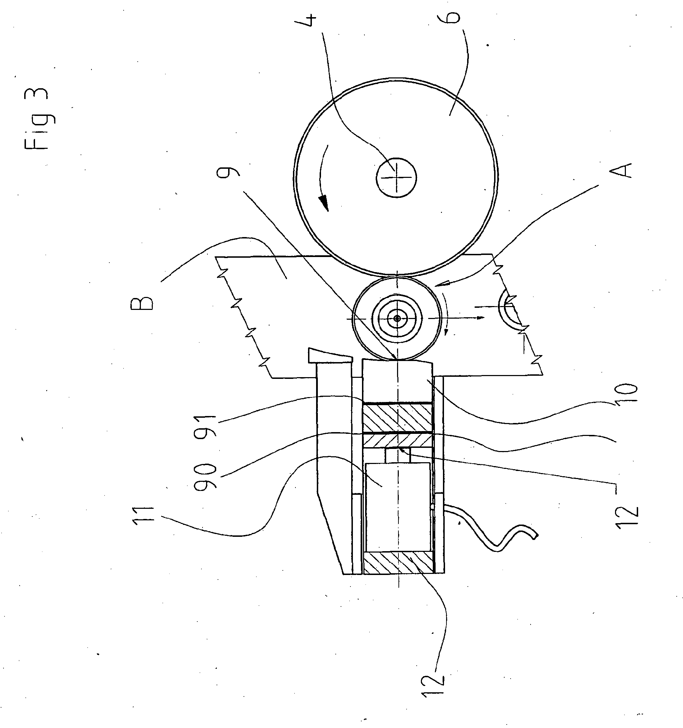

Probe 10 should not damage the aerosol container A. For this reason, probe 10 may be provided with a bevel or a rounded form, as visible in fig. 3. The measuring surface used was approximately 9 cm².

Preferably, probe 10 presses centrally halfway in relation to half the distance between two flanges F, F', therefore slightly less than half the height of the container. In practice, the said height appears not to be very critical.

## Claims

1. A method for determining the pressure inside a cylinder shaped container (A) having a bottom end and a top end, wherein the container (A) is pressed against a probe (10) and the wall (W) of the container (A) touching the probe (10) is pushed by the probe (10) inwards over a predetermined distance, and the force needed for pushing the wall (W) inwards up to the predetermined distance is determined by a sensor (11) that is connected operatively to the probe (10), **characterized in that** the side wall (W) of the container (A) near its bottom end is pressed against a bottom stop (8) and near its top end against a top stop (9), the container (A) is pressed against a probe (10) positioned between the bottom (8) and top (9) stops and the wall (W) of the container (A) touching the probe (10) is pushed inwards over a predetermined distance at a pressure inside the container (A) between atmospheric pressure and a desired pressure, wherein the predetermined distance at the desired pressure inside the container (A) differs maximally 15% from that when there is atmospheric pressure inside the container (A).

2. A method according to claim 1, wherein the bottom (8) and top (9) stops act as guides for carrying the container (A) over the probe (10).

3. A method according to claim 2, wherein the bottom (8) and top (9) stops act as guides for carrying the container (A) rotatingly around its longitudinal axis past the stops (8, 9) and over the probe (10) without skidding.

4. A method according to claim 3, wherein the container (A) is pressed against the stops (8, 9) using at least one pressure wheel (5; 6).

5. A method according to claim 4, wherein at least one pressure wheel (5, 6) is a driven pressure wheel.

6. A method according to any of the previous claims, wherein the probe (10) and the container (A) have a contact surface (12) of at least 0.5 cm2 when the desired pressure is present inside the container (A) and the probe (10) pushes the wall (W) of the container (A) inwards up to a predetermined distance.

7. A method according to any of the previous claims, wherein the container (A) is one having a metal wall (W) and the predetermined distance is a minimum of 0.1 mm and preferably a minimum of 0.25 mm.

8. A method according to claim 7, wherein the predetermined distance is a maximum of 2 mm, preferably a maximum of 1.5 mm and most preferably a maximum of 1 mm.

9. A method according to any of the claims 1 to 6, wherein the container (A) is a container having a synthetic wall (W) and the predetermined distance is a minimum of 1 mm and preferably a minimum of 1.5 mm.

10. A method according to claim 9, wherein the predetermined distance is a maximum of 8 mm, preferably a maximum of 6 mm and most preferably a maximum of 4 mm.

11. A method according to any of the previous claims, wherein the container (A) is an aerosol container and at least 1 of the bottom (8) and top (9) stops touching a contact area (12) is selected from a flange and a beaded edge (F; F') of the aerosol container (A).

12. A device (1) adapted to determine the pressure inside a container (A) in accordance with a method of any of the preceding claims, wherein the device (1) has a bottom stop (8) and a top stop (9) and a probe (10) is provided between the bottom (8) and top (9) stops, which is connected to a force sensor (11).

13. The device according to claim 12, wherein the entirety of the bottom (8) and top (9) stops, the probe (10) and the force sensor (11) form part of a unit, which unit is movable in a basic frame of the device (1) in a direction diagonal to the stops (8, 9) when a force is exerted to the unit while the unit is further designed to return to its original position after the force ceases to be exerted.

## Patentansprüche

1. Verfahren zur Bestimmung des Drucks in einem zylinderförmigen Behälter (A), welcher ein unteres Ende und ein oberes Ende aufweist, wobei der Behälter (A) gegen einen Messfühler (10) gedrückt wird und die Wand (W) des Behälters (A), die den Messfühler (10) berührt, durch den Messfühler (10) über eine zuvor bestimmte Strecke nach innen gedrückt wird, wobei die Kraft, die benötigt wird, um die Wand (W) die zuvor bestimmte Strecke nach innen zu drücken, durch einen Sensor (11), der mit dem Messfühler (10) in Wirkverbindung steht, bestimmt wird,
**dadurch gekennzeichnet,**
**dass** die Seitenwand (W) des Behälters (A) nahe des unteren Endes gegen einen unteren Anschlag (8) und nahe des oberen Endes gegen einen oberen Anschlag (9) gedrückt wird, der Behälter (A) gegen einen Messfühler (10) gedrückt wird, der zwischen dem unteren Anschlag (8) und dem oberen Anschlag (9) angeordnet ist und die Wand (W) des Behälters (A), die den Messfühler (10) berührt, eine zuvor bestimmte Strecke nach innen gedrückt wird, bei einem Druck in dem Behälter (A) zwischen atmosphärischem Druck und einem gewünschten Druck, wobei die zuvor bestimmte Strecke bei gewünschtem Druck, der in dem Behälter (A) herrscht, sich um maximal 15% von der zuvor bestimmten Strecke unterscheidet, wenn atmosphärischer Druck im Behälter (A) herrscht.

2. Verfahren nach Anspruch 1, wobei der untere Anschlag (8) und der obere Anschlag (9) als Führungen dienen, um den Behälter (A) über den Messfühler (10) zu bewegen.

3. Verfahren nach Anspruch 2, wobei der untere Anschlag (8) und der obere Anschlag (9) als Führungen dienen, um den Behälter (A) um seine Längsachse rotierend an den Anschlägen (8, 9) vorbei und über den Messfühler (10) ohne Rutschen zu bewegen.

4. Verfahren nach Anspruch 3, wobei der Behälter (A) unter Benutzung wenigstens einer Andrückrolle (5; 6) gegen die Anschläge (8, 9) gedrückt wird.

5. Verfahren nach Anspruch 4, wobei die wenigstens eine der Andrückrollen (5, 6) eine angetriebene Andrückrolle ist.

6. Verfahren nach einem der vorherigen Ansprüche, wobei der Messfühler (10) und der Behälter (A) eine Kontaktoberfläche (12) von wenigstens 0,5 cm² haben, wenn der gewünschte Druck im Behälter (A) vorhanden ist und der Messfühler (10) die Wand (W) des Behälters (A) eine zuvor bestimmte Strecke nach innen drückt.

7. Verfahren nach einem der vorherigen Ansprüche, wobei der Behälter (A) eine metallische Wand (W) aufweist und die zuvor bestimmte Strecke mindestens 0,1 mm, bevorzugt mindestens 0,25 mm beträgt.

8. Verfahren nach Anspruch 7, wobei die zuvor bestimmte Strecke maximal 2 mm, bevorzugt maximal 1,5 mm und besonders bevorzugt maximal 1 mm beträgt.

9. Verfahren nach einem der Ansprüche 1 bis 6, wobei der Behälter (A) eine synthetische Wand (W) aufweist und die zuvor bestimmte Strecke mindestens 1 mm, bevorzugt mindestens 1,5 mm beträgt.

10. Verfahren nach Anspruch 9, wobei die zuvor bestimmte Strecke maximal 8 mm, bevorzugt maximal 6 mm und besonders bevorzugt maximal 4 mm beträgt.

11. Verfahren nach einem der vorherigen Ansprüche, wobei der Behälter (A) ein Aerosol-Behälter ist und wenigstens der untere Anschlag (8) und/oder der obere Anschlag (9), die jeweils eine Kontaktfläche (12) berühren, aus einem Flansch oder einer Bördelkante (F; F') des Aerosol-Behälters (A) bestehen.

12. Vorrichtung (1) geeignet um den Druck in einem Behälter (A) gemäß eines Verfahrens nach einem der vorherigen Ansprüche zu messen, wobei die Vorrichtung (1) einen unteren Anschlag (8) und einen oberen Anschlag (9) aufweist und ein Messfühler (10) zwischen dem unteren Anschlag (8) und dem oberen Anschlag (9) angeordnet ist, welcher mit einem Kraftsensor (11) verbunden ist.

13. Vorrichtung nach Anspruch 12, wobei die Gesamtheit des unteren Anschlags (8), des oberen Anschlags (9), des Messfühlers (10) und des Kraftsensors (11) einen Teil einer Einheit bilden, wobei die Einheit in einem Grundrahmen der Vorrichtung (1) in einer diagonalen Richtung zu den Anschlägen (8, 9) bewegbar ist, wenn eine Kraft auf die Einheit ausgeübt wird, wobei die Einheit weiterhin dahin ausgelegt ist, in ihre ursprüngliche Position zurück zu kehren, wenn keine Kraft mehr auf die Einheit ausgeübt wird.

## Revendications

1. Procédé pour déterminer la pression à l'intérieur d'un contenant en forme de cylindre (A) comportant une extrémité inférieure et une extrémité supérieure, dans lequel le contenant (A) est pressé contre une sonde (10) et la paroi (W) du contenant (A) touchant la sonde (10) est poussée par la sonde (10) vers l'intérieur sur une distance prédéterminée, et la force nécessaire pour pousser la paroi (W) vers l'intérieur jusqu'à la distance prédéterminée est déterminée par un capteur (11) qui est connecté de manière fonctionnelle à la sonde (10), **caractérisé en ce que** la paroi latérale (W) du contenant (A), à proximité de son extrémité inférieure, est pressée contre une butée inférieure (8) et, à proximité de son extrémité supérieure, contre une butée supérieure (9), le contenant (A) est pressé contre une sonde (10) positionnée entre les butées inférieure (8) et supérieure (9) et la paroi (W) du contenant (A) touchant la sonde (10) est poussée vers l'intérieur sur une distance prédéterminée à une pression à l'intérieur du contenant (A) entre la pression atmosphérique et une pression souhaitée, dans lequel la distance prédéterminée à la pression souhaitée à l'intérieur du contenant (A) diffère de 15 % au maximum de celle lorsque l'intérieur du contenant (A) est à la pression atmosphérique.

2. Procédé selon la revendication 1, dans lequel les butées inférieure (8) et supérieure (9) agissent en tant que guides pour supporter le contenant (A) sur la sonde (10).

3. Procédé selon la revendication 2, dans lequel les butées inférieure (8) et supérieure (9) agissent en tant que guides pour supporter le contenant (A) en rotation autour de son axe longitudinal au-delà des butées (8, 9) et sur la sonde (10) sans patinage.

4. Procédé selon la revendication 3, dans lequel le contenant (A) est pressé contre les butées (8, 9) en utilisant au moins une roue de pression (5 ; 6).

5. Procédé selon la revendication 4, dans lequel au moins une roue de pression (5, 6) est une roue de pression entraînée.

6. Procédé selon l'une quelconque des revendications précédentes, dans lequel la sonde (10) et le contenant (A) ont une surface de contact (12) d'au moins 0,5 cm² lorsque la pression souhaitée est présente à l'intérieur du contenant (A) et que la sonde (10) pousse la paroi (W) du contenant (A) vers l'intérieur jusqu'à une distance prédéterminée.

7. Procédé selon l'une quelconque des revendications précédentes, dans lequel le contenant (A) est un contenant comportant une paroi métallique (W) et la distance prédéterminée est de 0,1 mm au minimum, et de préférence de 0,25 mm au minimum.

8. Procédé selon la revendication 7, dans lequel la distance prédéterminée est de 2 mm au maximum, de préférence de 1,5 mm au maximum, et plus préférablement de 1 mm au maximum.

9. Procédé selon l'une quelconque des revendications 1 à 6, dans lequel le contenant (A) est un contenant comportant une paroi synthétique (W) et la distance prédéterminée est de 1 mm au minimum, et de préférence de 1,5 mm au minimum.

10. Procédé selon la revendication 9, dans lequel la distance prédéterminée est de 8 mm au maximum, de préférence de 6 mm au maximum, et plus préférablement de 4 mm au maximum.

11. Procédé selon l'une quelconque des revendications précédentes, dans lequel le contenant (A) est un récipient d'aérosol et au moins l'une des butées inférieure (8) et supérieure (9) touchant une zone de contact (12) est sélectionnée parmi un rebord et un bord replié (F ; F') du récipient d'aérosol (A).

12. Dispositif (1) conçu pour déterminer la pression à l'intérieur d'un contenant (A) selon un procédé de l'une quelconque des revendications précédentes, dans lequel le dispositif (1) comporte une butée inférieure (8) et une butée supérieure (9) et une sonde (10) est prévue entre les butées inférieure (8) et supérieure (9), laquelle est reliée à un capteur de force (11).

13. Dispositif selon la revendication 12, dans lequel l'intégralité des butées inférieure (8) et supérieure (9), de la sonde (10) et du capteur de force (11) forment une partie d'une unité, laquelle unité peut être déplacée dans un cadre de base du dispositif (1) dans une direction diagonale aux butées (8, 9) lorsqu'une force est exercée sur l'unité, tandis que l'unité est en outre conçue pour retourner à sa position d'origine une fois que la force cesse d'être exercée.
